# EUROPÄISCHE PATENTSCHRIFT

(11) **EP 2 738 587 B1**
(45) Veröffentlichungstag und Bekanntmachung des Hinweises auf die Patenterteilung: **02.05.2018**
(21) Anmeldenummer: 13192538.0
(22) Anmeldetag: 12.11.2013
(51) Int. Cl.: G02B 21/16, G01N 21/64, G02B 21/24, G02B 21/26, G02B 21/36

(54) **Vorrichtung zum Mikroskopieren**
Microscopy device
Dispositif de microscopie

(30) Priorität: 28.11.2012 DE 102012111528
(43) Veröffentlichungstag der Anmeldung: 04.06.2014
(73) Patentinhaber: Airbus Defence and Space GmbH, 82024 Taufkirchen (DE)
(72) Erfinder: Kern, Peter, 88682 Salem (DE); Treichel, Rainer, 88690 Uhldingen-Mühlhofen (DE)
(74) Vertreter: Daub, Thomas

(56) Entgegenhaltungen:
- EP-A1- 1 630 586
- EP-A1- 2 363 742
- WO-A1-2008/050254
- WO-A1-2010/118541
- DE-U1- 8 700 101
- US-A- 5 818 637
- US-A1- 2002 060 842

## Beschreibung

### Stand der Technik

Die Erfindung betrifft eine Vorrichtung zum Mikroskopieren mit einer Bildausgangseinheit, zumindest zwei räumlich verteilt angeordneten Bildeingangseinheiten, die unterschiedliche Probenaufnahmebereiche aufweisen, zumindest einer Objektträgereinheit, die wenigstens eine Probe, insbesondere wenigstens eine biologische Probe, lagert, und mit einer Kopplungseinheit, die die Bildausgangseinheit und eine der zumindest zwei Bildeingangseinheiten optisch zu einer Mikroskopeinheit koppelt.

Übliche Mikroskope, insbesondere Lichtmikroskope, weisen eine Bilderzeugungseinheit zur Erzeugung eines vergrößerten Bilds auf, die aus in einem Mikroskoptubus angeordneten Objektivelementen, insbesondere Objektivlinsen, und Okularelementen, insbesondere Okularlinsen, besteht. Der Mikroskoptubus des Mikroskops weist einen großen Platzbedarf in eine definierte Richtung auf, wodurch eine Aufstellung des Mikroskops unter beengten Verhältnissen erschwert ist. Ferner ist es bei einem Einsatz des Mikroskops bei auf Zentrifugen gelagerten Proben, beispielsweise an Bord einer im Weltraum befindlichen Raumkapsel, Raumstation oder eines Satelliten erforderlich, das gesamten Mikroskop mitsamt dem Mikroskoptubus auf der Zentrifuge aufzubauen, wodurch aufgrund einer Rotation der Zentrifuge eine hohe Belastung einzelner Bauteile des Mikroskops auftritt und ein Experiment aufgrund einer durch Bewegungen von Mikroskopbauteilen bedingten Unwucht gestört werden kann. Eine Vorrichtung zum Mikroskopieren mit einer Bildausgangseinheit und zumindest zwei Bildeingangseinheiten ist aus der US 2002/0060842 A1 bekannt.

Ein Zentrifugenmikroskop ist aus der DE 87 00 101 U1 bekannt.

Die Aufgabe der Erfindung besteht insbesondere darin, eine gattungsgemäße Vorrichtung zum Mikroskopieren bereitzustellen, die auch unter beengten Verhältnissen gut einsetzbar ist. Die Aufgabe wird erfindungsgemäß durch eine Vorrichtung mit den Merkmalen des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Vorrichtung zum Mikroskopieren mit einer Bildausgangseinheit, zumindest zwei räumlich verteilt angeordneten Bildeingangseinheiten, die unterschiedliche Probenaufnahmebereiche aufweisen, zumindest einer Objektträgereinheit, die wenigstens eine Probe, insbesondere wenigstens eine biologische Probe, lagert, und mit einer Kopplungseinheit, die die Bildausgangseinheit und eine der zumindest zwei Bildeingangseinheiten optisch zu einer Mikroskopeinheit koppelt.

Unter einer "Mikroskopeinheit" soll insbesondere eine Einheit verstanden werden, die dazu vorgesehen ist, ein vergrößertes Bild eines Objekts zu erzeugen. Vorzugsweise erzeugt das Mikroskop das vergrößerte Bild des Objekts mittels eines Lichtstrahls, wobei der Lichtstrahl rein passiv von dem Objekt empfangen oder aktiv von dem Mikroskop erzeugt werden kann. Insbesondere weist die Mikroskopeinheit als Linsen wirkende Bauelemente zur Erzeugung eines vergrößerten Bilds auf. Grundsätzlich kann die Mikroskopeinheit auch ein vergrößertes Bild eines Objekts mittels eines Teilchenstrahls, beispielsweise eines Elektronen- oder lonenstrahls erzeugen. Unter einer "Bildeingangseinheit" soll insbesondere eine Einheit verstanden werden, die dem Objekt zugewandt ist und die ein Bild des Objekts aufnimmt, das zu einer Vergrößerung und Betrachtung über einen Bildübertragungspfad an die Bildausgangseinheit übertragen wird. Vorzugsweise weist die Bildeingangseinheit zumindest eine Objektivlinse oder ein als Objektivlinse wirkendes Magnetfelderzeugungselement zur Fokussierung eines Teilchenstrahls auf, mittels dem das Bild des Objekts aufgenommen wird. Unter einem "Bildübertragungspfad" soll insbesondere ein optischer Weg zwischen zwei Einheiten verstanden werden, wobei auf dem Bildübertragungspfad Elemente zu einer Beeinflussung eines Strahlengangs, wie beispielsweise Umlenkelemente, angeordnet sein können. Der Bildübertragungspfad kann geradlinig oder mittels Umlenkelementen auch ungeradlinig ausgebildet sein. Darunter, dass die Bildeingangseinheiten "unterschiedliche

Probenaufnahmebereiche aufweisen" soll insbesondere verstanden werden, dass die Bildeingangseinheiten zu einem gleichen Zeitpunkt auf unterschiedliche Proben ausgerichtet sind, und dass durch eine optische Kopplung zwischen Bildausgangseinheit und unterschiedlichen Bildeingangseinheiten unterschiedliche Proben im Wechsel betrachtet werden. Insbesondere sind zumindest zwei Bildeingangseinheiten mit unterschiedlichen Probenaufnahmebereichen verschieden von einer als Standard-Objektrevolvereinheit ausgebildeten Bildeingangseinheit, in der durch eine Rotation unterschiedliche Objektivlinsen ausgewählt werden können. Unter einem "Probenaufnahmebereich" soll insbesondere ein Bereich verstanden werden, in dem eine Bildeingangseinheit eine Probe betrachten kann, wobei der Probenaufnahmebereich durch einen Öffnungswinkel der Bildeingangseinheit sowie einen Schwenk- und/oder Bewegungsbereich der Bildeingangseinheit gegeben ist.

Unter einer "Bildausgangseinheit" soll insbesondere eine Einheit verstanden werden, die in dem Bildübertragungspfad vom Objekt zu einem Beobachter oder einem Gerät zur Bildspeicherung wie beispielsweise einem Computer oder einer Kamera mit Speicher zwischen der Bildeingangseinheit und dem Beobachter oder dem Gerät zur Bildspeicherung angeordnet ist und ein vergrößertes Bild des Objekts aus dem von der Bildeingangseinheit übermittelten Bild dem Beobachter oder dem Gerät zur Bildspeicherung zur Verfügung stellt. Insbesondere kann die Bildausgangseinheit eine Kamera oder einen Monitor zur Betrachtung des Bilds durch den Beobachter aufweisen. Insbesondere bildet die Bildausgangseinheit eine Schnittstelle zwischen dem Beobachter und der Mikroskopeinheit. Vorzugsweise weist die Bildeingangseinheit zumindest eine Okularlinse oder ein als Okularlinse wirkendes Magnetfelderzeugungselement zur Fokussierung eines Teilchenstrahls auf, mittels dem das vergrößerte Bild des Objekts aus einem von der Bildeingangseinheit erzeugten Bild erzeugt wird. Vorzugsweise sind die Bildeingangseinheiten und die Bildausgangseinheit in zumindest einem Betriebszustand voneinander getrennt ausgebildet und frei von einer physischen Verbindung wie beispielsweise einer Montierung in einem gemeinsamen Gehäuse. Darunter, dass "die Bildausgangseinheit und eine der zumindest zwei Bildeingangseinheiten zu einer Mikroskopeinheit optisch gekoppelt werden" soll insbesondere verstanden werden, dass die Kopplungseinheit dazu vorgesehen ist, die Bildausgangseinheit und eine der zumindest zwei Bildeingangseinheiten gezielt zur Herstellung einer optischen Verbindung aufeinander auszurichten, wobei die Herstellung der optischen Verbindung frei von einer Herstellung einer physischen Verbindung der Bildausgangseinheit und der Bildeingangseinheit ist. Insbesondere koppelt die Kopplungseinheit die Bildausgangseinheit und die Bildeingangseinheit durch eine gezielte Ausrichtung der Bildausgangseinheit und/oder der Bildeingangseinheit auf ein Bildlenkelement oder eine gezielte Ausrichtung des Bildlenkelements auf die Bildausgangseinheit und die Bildeingangseinheit. Insbesondere koppelt die Kopplungseinheit die Bildausgangseinheit und unterschiedliche Bildeingangseinheiten zu einer Mikroskopeinheit, um im Wechsel unterschiedliche Proben, insbesondere in einem ansonsten feststehenden Experimentaufbau, zu betrachten. Unter einem "Bildlenkelement" sollen insbesondere Elemente verstanden werden, die einen Strahlengang formen und richten können, wie beispielsweise Linsen, Prismen und/oder Spiegel. Es kann insbesondere eine flexibel anzuordnende Mikroskopeinheit erreicht werden, da lediglich die Bildeingangseinheiten den Objektträgereinheiten zugeordnet sind, die Bildausgangseinheit jedoch weitgehend beliebig an einer Stelle mit freiem Platz angeordnet werden kann.

Ferner wird vorgeschlagen, dass das Mikroskop in einem montierten und ausgerichteten Zustand mehrteilig ausgebildet ist. Unter "in einem montierten und ausgerichteten Zustand mehrteilig ausgebildet" soll insbesondere verstanden werden, dass das Mikroskop in einem montierten Zustand, in dem es aufgrund einer optischen Kopplung der Bildausgangseinheit und einer Bildeingangseinheit betrieben werden kann, zumindest zwei voneinander getrennte, physisch unverbundene Teileinheiten aufweist, die lediglich eine optische Verbindung zueinander zur Bildübertragung aufweisen. Insbesondere kann eine Teileinheit, die zu einer Aufnahme eines Bild eines Objekts vorgesehen ist, nahe an dem Objekt positioniert werden und eine weitere Teileinheit an einem getrennten Ort zu einer möglichst vorteilhaften Platzausnutzung angeordnet werden. Insbesondere ist die Teileinheit, die zu einer Aufnahme eines Bilds eines Objekts vorgesehen ist, von einer Bildeingangseinheit und einer weiteren Teileinheit von der Bildausgangseinheit gebildet. Es kann insbesondere ein flexibel einsetzbares Mikroskop erreicht werden, das insbesondere unter beengten Verhältnissen besonders vorteilhaft, platzsparend und einfach anzuordnen ist. Erfindungsgemäß wird vorgeschlagen, dass zumindest eine Objektträgereinheit als Zentrifuge ausgebildet ist. Auf der Zentrifuge ist zumindest eine Probe fest angeordnet, so dass sie an einer Rotation der Zentrifuge teilnimmt. Die Zentrifuge ist insbesondere dazu vorgesehen, für die Probe eine höhere Schwerkraft als 1 g zu erzeugen oder bei äußeren Bedingungen mit einer niedrigeren Schwerkraft als 1 g eine Schwerkraft in einem Bereich von der niedrigeren Schwerkraft als 1 g, indem die Zentrifuge stillstehend betrieben wird und lediglich als feststehende Lagerfläche fungiert, bis zu mehreren g zu erzeugen. Es kann insbesondere eine flexible Objektträgereinheit zur Beobachtung einer Probe unter unterschiedlichen, einstellbaren Bedingungen erreicht werden.

Ferner wird vorgeschlagen, dass in zumindest einem Betriebszustand zumindest eine der Bildeingangseinheiten rotatorisch an zumindest eine zugeordnete Objektträgereinheit gekoppelt ist. Unter "rotatorisch zumindest im Wesentlichen an die zumindest eine zugeordnete Objektträgereinheit gekoppelt" soll insbesondere verstanden werden, dass die Bildeingangseinheit ebenfalls rotierbar gelagert ist, wobei die Bildeingangseinheit zusammen mit der wenigstens einen Probe auf der zumindest einen Objektträgereinheit rotierbar gelagert sein kann oder auf einer separaten rotierbaren Einheit gelagert ist, die mit einer Rotationsgeschwindigkeit rotiert, die maximal um fünf Prozent, vorteilhaft maximal um zwei Prozent und vorzugsweise maximal um ein Prozent von einer Rotationsgeschwindigkeit der Objektträgereinheit abweicht, wobei eine Abweichung im Wesentlichen durch eine Ungenauigkeit einer Ansteuerung bedingt ist. Insbesondere kann die Bildeingangseinheit mit derselben Rotationsgeschwindigkeit wie die Objektträgereinheit gefahren werden. Es kann insbesondere eine verschiebungsfreie Aufnahme einer rotierenden Probe erreicht werden.

Ferner wird vorgeschlagen, dass in dem zumindest einen Betriebszustand die zumindest eine Bildeingangseinheit gegenüber der Bildausgangseinheit rotiert.
Insbesondere ist die Bildausgangseinheit statisch, während die Bildeingangseinheit rotatorisch an eine zugeordnete Objektträgereinheit gekoppelt ist. Es kann insbesondere eine mechanische Belastung der Bildausgangseinheit, insbesondere von Zusatzgerätschaften der Bildausgangseinheit wie Laserlichtquellen zur Erzeugung eines Fluoreszenzsignals der Probe, insbesondere durch Vibrationen aufgrund einer Mitrotation der Bildausgangseinheit vermieden werden.

Des Weiteren wird vorgeschlagen, dass die Vorrichtung zumindest eine in einem Strahlengang zwischen der zumindest einen Bildeingangseinheit und der Bildausgangseinheit angeordnete Derotatoreinheit aufweist. Unter einer "Derotatoreinheit" soll insbesondere eine Einheit verstanden werden, die dazu vorgesehen ist, ein aufgrund einer Rotation der Bildeingangseinheit relativ zu der Bildausgangseinheit rotierendes Bild in ein feststehendes Bild, das an die Bildausgangseinheit übermittelt wird, umzuwandeln. Die Derotatoreinheit kann hierzu als eine Einheit mit einer Bildaufnahme, die das rotierende Bild elektronisch bearbeitet und derotiert an die Bildausgangseinheit übermittelt, oder als eine Einheit mit einem optischen Elemente, beispielsweise einem Prisma, das geeignet bewegt wird, um eine Winkeländerung des Bilds aufgrund der Rotation der Bildeingangseinheit relativ zu der Bildausgangseinheit auszugleichen, ausgebildet sein. Es kann insbesondere ein einfach zu beobachtendes Bild ohne Störeinflüße aufgrund einer Rotation erreicht werden.

Ferner wird zumindest eine Drehzahlhalbierungseinheit, mittels der die Derotatoreinheit zumindest im Wesentlichen mit einer halben Drehzahl der zumindest einen Bildeingangseinheit rotiert, vorgeschlagen. Insbesondere ist die zumindest eine Bildeingangseinheit mit der Bildausgangseinheit über ein als Spiegel ausgebildetes Umlenkelement optisch verbunden, so dass aufgrund einer Gleichheit von Einfalls- und Ausfallswinkel eine Winkeländerung aufgrund einer Rotation der Bildeingangseinheit und der wenigstens einen Probe verdoppelt wird, und die Derotatoreinheit als ein Prisma ausgebildet ist, so dass aufgrund einer Rotation des Prismas mit einer halben Rotationsgeschwindigkeit der Bildeingangseinheit das Bild derotiert wird. Es kann insbesondere eine konstruktiv einfach ausgebildete Derotatoreinheit erreicht werden.

Weiterhin wird vorgeschlagen, dass die Bildausgangseinheit mit der zumindest einen Bildeingangseinheit optisch über zumindest ein Umlenkelement verbunden ist. Unter einem "Umlenkelement" soll insbesondere ein Element verstanden werden, dass einen Strahlengang eines Bilds, vorzugsweise unter einem möglichst geringen Verlust einer Intensität, umlenkt, wie beispielsweise ein Spiegel oder ein Prisma. Es kann insbesondere konstruktiv einfach eine hohe Flexibilität einer Anordnung der Bildausgangseinheit gegenüber den Bildeingangseinheiten erreicht werden, indem ein Bildübertragungspfad mittels des zumindest einen Umlenkelements geeignet eingestellt wird.

Des Weiteren wird zumindest eine Kanalwechseleinheit vorgeschlagen, die dazu vorgesehen ist, die Bildausgangseinheit zwischen verschiedenen Probenkanälen, die jeweils einer Probe zugeordnet sind, umzuschalten. Unter einer "Kanalwechseleinheit" soll insbesondere eine Einheit verstanden werden, die einen Wechsel der Probenkanäle bewirkt, beispielsweise indem die Bildausgangseinheit zwischen verschiedenen Positionen, die verschiedenen Probenkanälen zugeordnet sind, bewegt wird oder indem mittels eines Auswahlelements wie beispielsweise einem Auswahlspiegel ein Probenkanal aus mehreren Probenkanälen ausgewählt wird und optisch mit der Bildausgangseinheit verbunden wird, wobei ein bislang betrachteter Probenkanal verdrängt wird, oder indem eine einer Bildeingangseinheit, die mit der Bildausgangseinheit optisch gekoppelt ist, zugeordnete Probe durch eine andere Probe ersetzt wird, beispielsweise indem eine Objektträgereinheit relativ zu der Bildeingangseinheit rotiert. Vorzugsweise ist eine Möglichkeit einer Bewegung der Bildausgangseinheit zwischen verschiedenen Positionen kombiniert mit einer Wechselmöglichkeit zwischen mehreren einer Position zugeordneten Bildeingangseinheiten und/oder einer Möglichkeit, eine durch eine Bildeingangseinheit betrachtete Probe mittels der Kanalwechseleinheit zu wechseln. Unter einem "Probenkanal" soll insbesondere ein jeweiliger Bildübertragungspfad von einer bestimmten Probe auf ein optisch gekoppeltes Paar von einer Bildeingangseinheit und einer Bildausgangeinheit, die eine Mikroskopeinheit ausbilden, verstanden werden. Es kann insbesondere eine Betrachtung mehrere Proben mit einer einzelnen Bildausgangseinheit erreicht werden, wodurch eine separate Bildausgangseinheit für weitere Proben eingespart werden kann.

Ferner wird vorgeschlagen, dass die Kanalwechseleinheit zumindest eine Bildausgangswechseleinheit aufweist, die dazu vorgesehen ist, die wenigstens eine Bildausgangseinheit zwischen zumindest zwei jeweils zumindest einem Probenkanal zugeordneten Arbeitspositionen zu verfahren oder zu positionieren. Vorzugsweise ist die Bildausgangswechseleinheit als eine auf einer Schiene verfahrbare oder rotierbare Trägereinheit für die Bildausgangseinheit ausgebildet. Es kann insbesondere eine konstruktiv einfach ausgebildete Kanalwechseleinheit erreicht werden.

Ferner wird vorgeschlagen, dass die Kanalwechseleinheit zumindest eine Bildeingangswechseleinheit aufweist, die dazu vorgesehen ist, zumindest eine der zumindest zwei Bildeingangseinheiten zwischen mehreren Probenkanälen umzuschalten. Die Bildeingangswechseleinheit kann beispielsweise einen bewegbaren, vorzugsweise drehbaren Auswahlspiegel aufweisen, der selektiv die Bildeingangswechseleinheit mit unterschiedlichen Proben verbindet, oder als eine rotierbare Objektträgereinheit mit mehreren Proben, die im Wechsel vor die Bildeingangseinheit rotiert werden, ausgebildet sein. Es kann insbesondere eine konstruktiv einfach ausgebildete Kanalwechseleinheit erreicht werden.

Weiterhin wird vorgeschlagen, dass die Bildeingangswechseleinheit die zumindest eine der zumindest zwei Bildeingangseinheiten durch eine Drehbewegung zwischen mehreren Probenkanälen umschaltet. Vorzugsweise wird die Drehbewegung zu einer Umschaltung zwischen mehreren Probenkanälen durch eine Rotations- oder Schwenkbewegung unterschiedlicher Proben relativ zu einer statischen Bildeingangseinheit erreicht. Grundsätzlich kann auch die Bildeingangseinheit relativ zu statisch gelagerten Proben rotiert und/oder durch eine Schwenkbewegung ausgerichtet werden, um eine Umschaltung zwischen mehreren Probenkanälen zu erreichen. Es kann insbesondere eine konstruktiv einfach ausgebildete Bildeingangswechseleinheit erreicht werden.

Des Weiteren wird vorgeschlagen, dass die Vorrichtung eine Mehrfachträgerstruktur, an der die Kanalwechseleinheit, zumindest eine Bildausgangseinheit, sowie mehrere Objektträgereinheiten und zugeordnete Bildeingangseinheiten angeordnet sind, aufweist. Unter einer "Mehrfachträgerstruktur" soll insbesondere eine Struktur mit mehreren definierten Arbeitsstationen für eine Aufnahme von lokalen Objektträgereinheiten mit zugeordneten Bildeingangseinheiten verstanden werden, wobei die Arbeitsstationen derart ausgebildet sind, beispielsweise durch ein Vorsehen von Sichtlöchern, das eine optische Kopplung der Bildeingangseinheiten mit der Bildausgangseinheit ermöglicht ist. Die Mehrfachträgerstruktur kann als lineare Mehrfachträgerstruktur, beispielsweise als ein Tisch mit einer Oberseite, an der mehrere als Zentrifugen ausgebildete Objektträgereinheiten zusammen mit zugeordneten rotatorisch gekoppelten Bildeingangseinheiten angeordnet sind, und mit einer Unterseite, an der an einer Schiene oder Führung mit einer an der Schiene oder Führung verfahrbaren Bildausgangseinheit angeordnet ist, ausgebildet sein, wobei der Tisch an oder nahe an Positionen der Bildeingangseinheiten Sichtlöcher zu einer Durchleitung des Bild der Bildeingangseinheit aufweist, die mit korrespondierenden Sichtlöchern der Objektträgereinheiten, Kopplungseinheiten und/oder Bildeingangseinheiten in Überdeckung gebracht werden. Die Mehrfachträgerstruktur kann auch in davon abweichenden Formen ausgebildet sein, beispielsweise als eine ringförmige Struktur mit einer Innenseite, an der die Bildausgangseinheit verfahrbar angeordnet ist und eine Außenseite, an der Objektträgereinheiten, Bildeingangseinheiten und Proben angeordnet sind. Es kann insbesondere ein kompakter, einfach zu bedienender Aufbau der Vorrichtung erreicht werden.

Ferner wird vorgeschlagen, dass zumindest eine der Objektträgereinheit als Mehrfachprobenträgereinheit ausgebildet ist, an der mehrere Proben angeordnet sind. Es kann insbesondere eine Reduktion einer Anzahl benötigter Bildeingangseinheiten erreicht werden.

Ferner wird vorgeschlagen, dass jeder Objektträgereinheit zumindest eine separate Bildeingangseinheit zugeordnet ist. Vorzugsweise sind die Objektträgereinheiten als Mehrfachprobenträgereinheiten ausgebildet. Es kann insbesondere auf eine Bewegung einer Bildeingangseinheit zwischen mehreren Objektträgereinheiten verzichtet und ein apparativer Aufwand somit verringert werden.

Ferner wird vorgeschlagen, dass die Mehrfachträgerstruktur als eine Polygonstruktur ausgebildet ist. Unter einer "Polygonstruktur" soll insbesondere eine Mehrfachträgerstruktur mit einer Vieleckform verstanden werden, wobei auf Seiten der Vieleckform zwischen Ecken der Vieleckform Objektträgereinheiten mit zugeordneten Bildeingangseinheiten angeordnet sind und in einem Zentrum der Vieleckform die Bildausgangseinheit angeordnet ist. Die Polygonstruktur ist insbesondere zu einem Einsatz unter zumindest weitgehender Schwerelosigkeit vorgesehen. Es kann insbesondere ein platzsparende Mehrfachträgerstruktur erreicht werden.

Des Weiteren wird vorgeschlagen, dass jeder Probe jeweils eine separate Bildeingangseinheit zugeordnet ist. Insbesondere wird ein Wechsel zwischen Probenkanälen durch Drehung eines Auswahlspiegels, der die Bildeingangseinheit optisch mit der Bildausgangseinheit verbinden kann, erreicht. Es kann insbesondere eine Beobachtung mehrerer Proben mit einem geringen apparativen Aufwand des Beobachtungswechsels erreicht werden.

Ferner wird vorgeschlagen, dass die Mikroskopeinheit als Fluoreszenzmikroskopeinheit ausgebildet ist. Unter einer "Fluoreszenzmikroskopeinheit" soll insbesondere eine Mikroskopeinheit verstanden werden, die mindestens eine Lichtquelle, vorzugsweise eine Laserlichtquelle, zu einem Anstrahlen der Probe zur Erzeugung eines Fluoreszenzsignals der Probe und zumindest einem Filterelement zu einer Ausfilterung von Lichtfrequenzen, die von Lichtfrequenzen des Fluoreszenzsignals abweichen, aufweist. Die Fluoreszenzmikroskopeinheit kann ferner weitere Zusatzgerätschaften, beispielsweise für eine Durchführung einer STED- oder TIRF-Mikroskopie, aufweisen. Vorzugsweise weist die Bildeingangseinheit der Fluoreszenzmikroskopeinheit lediglich eine oder mehrere Objektivlinsen auf. Die Bildausgangseinheit weist sämtliche weitere benötigte Elemente wie Laserlichtquellen, Filterelemente und weitere Zusatzgerätschaften auf. Insbesondere kann durch eine Aufnahme komplizierterer und empfindlicher Bauteile der Fluoreszenzmikroskopeinheit in eine feststehende Bildausgangseinheit eine geringe mechanische Belastung der komplizierteren Bauteile auch bei einer Beobachtung einer rotierenden Probe sowie eine geringere Unwucht auf einer Rotationsvorrichtung zur Rotation der Probe erreicht werden. Ferner kann insbesondere eine Vorrichtung mit einer besonders hohen Auflösung erreicht werden.

Ferner wird eine Verwendung einer Vorrichtung nach einem der vorhergehenden Ansprüche unter Bedingungen reduzierter Schwerkraft vorgeschlagen. Unter "Bedingungen reduzierter Schwerkraft" sollen insbesondere Bedingungen verstanden werden, bei denen eine Schwerewirkung von maximal 0,9 g, vorteilhaft maximal 1*10⁻³ g, vorzugsweise maximal 1*10⁻⁶ g und besonders bevorzugt maximal 1*10⁻⁸ g wirksam ist. Die Schwerewirkung kann durch Gravitation und/oder künstlich durch eine Beschleunigung erzeugt sein. Mit "g" ist der Wert der Fallbeschleunigung auf der Erde von 9,81 m/s² bezeichnet. Es kann insbesondere eine von Schwerkrafteinflüssen freie Beobachtung der Probe und deren Verhalten erreicht werden. Ferner kann insbesondere in Zusammenwirkung mit einer als Zentrifuge ausgebildeten Objektträgereinheit eine Probe unter verschiedenen, insbesondere wechselnden, durch Ansteuerung der Zentrifuge eingestellte Schwerkraftbedingungen in einem Bereich einer Schwerkraft von weniger als 1 g bis hin zu Hypergravitation mit einer Schwerkraft von mehreren g untersucht werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Vorrichtung zum Mikroskopieren mit einer Bildausgangseinheit, mehreren Mehrfachprobenträgereinheiten mit zugeordneten Bildeingangseinheiten und einer Kopplungseinheit auf einer linearen Mehrfachträgerstruktur,
- Fig. 2: die erfindungsgemäße Vorrichtung mit einer Detailansicht auf eine einzelne Objektträgereinheit mit Bildeingangseinheit,
- Fig. 3: eine weitere Detailansicht auf eine Objektträgereinheit und einer Bildeingangseinheit der erfindungsgemäßen Vorrichtung,
- Fig. 4: eine schematische Sicht auf eine Derotatoreinheit der erfindungsgemäßen Vorrichtung zum Mikroskopieren,
- Fig. 5: eine alternative Vorrichtung mit einer alternativen Mehrfachträgerstruktur die als Polygonstruktur ausgebildet ist und
- Fig. 6: eine weitere alternative Vorrichtung zum Mikroskopieren, bei der jeder Probe auf einer Objektträgereinheit eine separate Bildeingangseinheit zugeordnet ist und die Kopplungseinheit eine Einheit zur Drehung eines Umlenkelements aufweist.

### Beschreibung der Ausführungsbeispiele

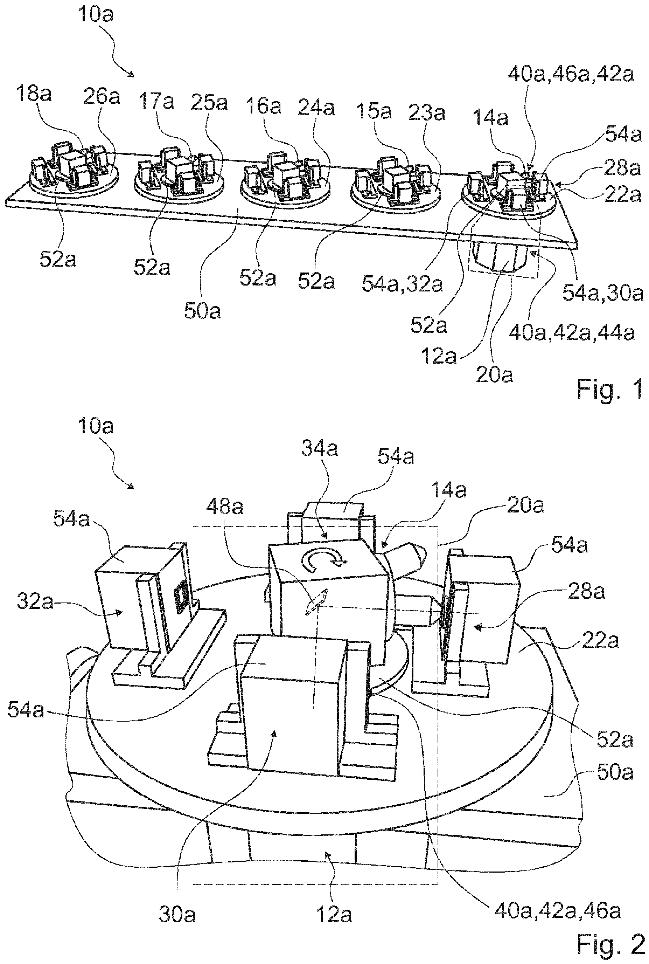

Fig. 1 zeigt eine Vorrichtung 10a zum Mikroskopieren mit einer Bildausgangseinheit 12a, fünf räumlich verteilt angeordneten Bildeingangseinheiten 14a, 15a, 16a, 17a, 18a, die unterschiedliche Probenaufnahmebereiche aufweisen, fünf Objektträgereinheiten 22a, 23a, 24a, 25a, 26a, die jeweils vier Proben 28a, 30a, 32a, 34a, die von biologischen Proben gebildet sind, lagern und mit einer Kopplungseinheit 40a, die die Bildausgangseinheit 12a und eine der Bildeingangseinheiten 14a, 15a, 16a, 17a, 18a optisch zu einer Mikroskopeinheit 20a koppelt. Die Bildausgangseinheit 12a weist eine Okularlinse zu einer vergrößerten Abbildung eines mittels einer der Bildeingangseinheiten 14a, 15a, 16a, 17a, 18a aufgenommenen Bilds einer der Proben 28a, 30a, 32a, 34a sowie mindestens eine Laserlichtquelle zur Erzeugung eines Fluoreszenzsignals in einer betrachteten Probe 28a, 30a, 32a, 34a, Filterelemente zu einem Herausfiltern von Lichtfrequenzen außerhalb eines Frequenzbereichs des Fluoreszenzsignals, insbesondere zu einem Herausfiltern eines Anregungssignals der Laserlichtquelle, und eine Kamera mit Speichersystem zu einer Speicherung der vergrößerten Bilder der Proben 28a, 30a, 32a, 34a. Die Mikroskopeinheit 20a ist somit als Fluoreszenzmikroskopeinheit ausgebildet. Die Bildeingangseinheiten 14a, 15a, 16a, 17a, 18a weisen jeweils einen Objektivrevolver mit mehreren Objektivlinsen auf, die geeignet ausgewählt werden können, und sind auf ein drehbar auf einer Drehträgereinheit 52a gelagertes Gehäuse montiert, wobei die Drehträgereinheit 52a von der Objektträgereinheit 22a, 23a, 24a, 25a, 26a seitlich umschlossen wird. Die Objektträgereinheiten 22a, 23a, 24a, 25a, 26a sind als Zentrifugen ausgebildet, auf denen jeweils vier Proben 28a, 30a, 32a, 34a ortsfest jeweils in einem Probenbehälter 54a angeordnet sind. Die Probenbehälter 54a sind auf den Objektträgereinheiten 22a, 23a, 24a, 25a, 26a jeweils auf einer Schiene montiert, die eine lineare eindimensionale Verschiebung der Probenbehälter 54a in einem kleinen Bereich erlauben, um unterschiedliche Teilbereiche einer der Proben 28a, 30a, 32a, 34a zu betrachten. In alternativen Ausgestaltungen können die Probenbehälter auch zwei- oder dreidimensional bewegbar auf den Objektträgereinheiten 22a, 23a, 24a, 25a, 26a angeordnet sein, um durch Positionsveränderungen in zwei oder drei Dimensionen unterschiedliche Teilbereiche einer Probe28a, 30a, 32a, 34a zu betrachten. Die Probenbehälter 54a weisen ein Sichtfenster mit einer Glasscheibe zum Betrachten der Proben 28a, 30a, 32a, 34a auf. Die Objektträgereinheiten 22a, 23a, 24a, 25a, 26a sind somit als Mehrfachprobenträgereinheiten ausgebildet, an denen mehrere Proben 28a, 30a, 32a, 34a angeordnet sind. In einer alternativen Ausbildung kann auch jeweils eine Probe 28a, 30a, 32a, 34a auf einer der Objektträgereinheiten 22a, 23a, 24a, 25a, 26a angeordnet sein. In zumindest einem Betriebszustand ist eine der Bildeingangseinheiten 14a, 15a, 16a, 17a, 18a zumindest im Wesentlichen rotatorisch an zumindest eine zugeordnete Objektträgereinheit 22a, 23a, 24a, 25a, 26a gekoppelt, was durch eine Ansteuerung der Drehträgereinheit 52a der Bildeingangseinheit 14a, 15a, 16a, 17a, 18a und der zugeordneten Objektträgereinheit 22a, 23a, 24a, 25a, 26a zu einer Rotation mit einer gleichen Winkelgeschwindigkeit bewirkt wird. Jeder Objektträgereinheit 22a, 23a, 24a, 25a, 26a ist eine separate Bildeingangseinheit 14a, 15a, 16a, 17a, 18a zugeordnet.

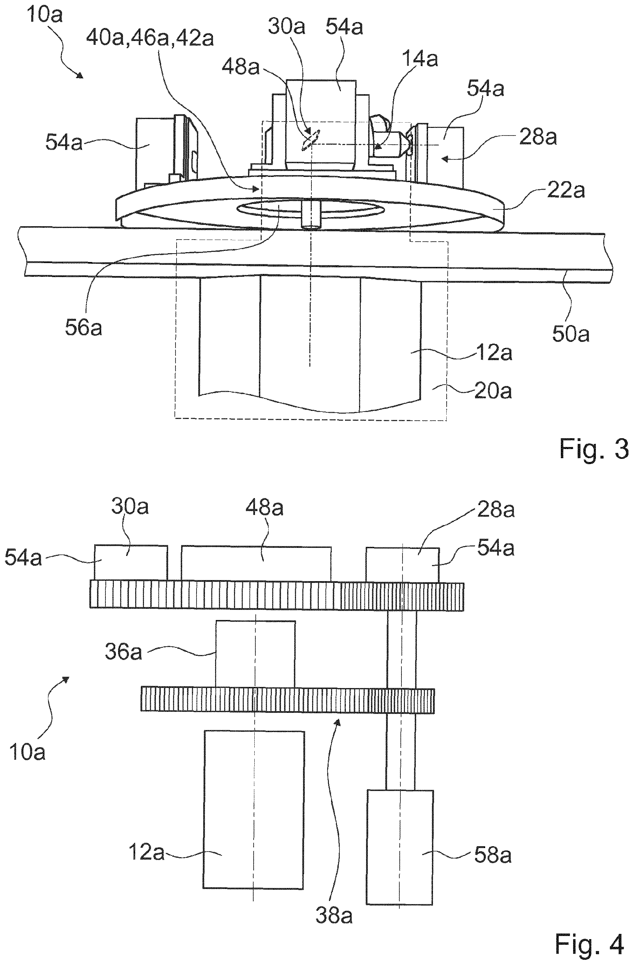

Die Bildausgangseinheit 12a ist mit der Bildeingangseinheit 14a in dem gezeigten Beispiel optisch über ein Umlenkelement 48a verbunden (Fig. 2) und dieser zu einer Mikroskopeinheit 20a gekoppelt. Die Bildausgangseinheit 12a ist mit der Bildeingangseinheit 14a frei von einer physischen Verbindung (Fig. 3) optisch verbunden und somit ist die Mikroskopeinheit 20a in einem montierten und ausgerichteten Zustand mehrteilig ausgebildet. Die Kopplungseinheit 40a, die die Bildausgangseinheit 12a mit einer der Bildeingangseinheiten 14a, 15a, 16a, 17a, 18a optisch zu einer Mikroskopeinheit 20a koppelt, ist von einer Einheit zu einem Verfahren der Bildausgangseinheit 12a an einer Unterseite eines Tisches entlang einer Schiene oder Führung gebildet. Auf einer Oberseite des Tisches, der eine Mehrfachträgerstruktur 50a bildet, an der eine Kanalwechseleinheit 42a, eine Bildausgangseinheit 12a sowie mehrere Objektträgereinheiten 22a, 23a, 24a, 25a, 26a und die zugeordneten Bildeingangseinheiten 14a, 15a, 16a, 17a, 18a angeordnet sind, sind die Objektträgereinheiten 22a, 23a, 24a, 25a, 26a und zugeordnete Bildeingangseinheiten 14a, 15a, 16a, 17a, 18a angeordnet. Sichtlöcher 56a in dem Tisch sowie korrespondierende Löcher in den als Zentrifugen ausgebildeten Objektträgereinheiten 22a, 23a, 24a, 25a, 26a erlauben einen Durchgang des Bilds von den Bildeingangseinheiten 14a, 15a, 16a, 17a, 18a zu der Bildausgangseinheit 12a. Durch ein Verfahren der Bildausgangseinheit 12a an unterschiedlichen Arbeitspositionen, in denen ein Strahlengang über das Umlenkelement 48a, das innerhalb des Gehäuses auf der Drehträgereinheit 52a angeordnet ist, die Bildausgangseinheit 12a und eine der Bildeingangseinheiten 14a, 15a, 16a, 17a, 18a wird eine optische Kopplung zu einer Mikroskopeinheit 20a erreicht.

Eine Kanalwechseleinheit 42 der Vorrichtung 10a zum Mikroskopieren ist dazu vorgesehen, die Bildausgangseinheit 12a zwischen verschiedenen Probenkanälen, die jeweils einer Probe 28a, 30a, 32a, 34a zugeordnet sind, umzuschalten. Die Kanalwechseleinheit 42a weist eine Bildausgangswechseleinheit 44a auf, die dazu vorgesehen ist, die eine Bildausgangseinheit 12a zwischen den jeweils zumindest einem Probenkanal zugeordneten Arbeitspositionen zu verfahren oder zu positionieren. Die Bildausgangswechseleinheit 44a ist von der Einheit zum Verfahren der Bildausgangseinheit 12a entlang der Schiene oder Führung an der Unterseite der Mehrfachträgerstruktur 50a gebildet. Ein Probenkanal ist ein Bildübertragungskanal von einer bestimmten Probe 28a, 30a, 32a, 34a über eine der Bildeingangseinheiten 14a, 15a, 16a, 17a, 18a, ein Umlenkelement 48a zu der Bildausgangseinheit 12a, mittels der die bestimmte Probe 28a, 30a, 32a, 34a mikroskopiert werden kann. Jeder Arbeitsposition sind mehrere, in diesem Beispiel vier Probenkanäle zugeordnet, da auf jeder Objektträgereinheit 22a, 23a, 24a, 25a, 26a in diesem Beispiel jeweils vier Proben 28a, 30a, 32a, 34a angeordnet sind. Zur Selektion von einem der vier Probenkanäle einer ausgewählten Arbeitsposition weist die Kanalwechseleinheit 42a für jede der Objektträgereinheiten 22a, 23a, 24a, 25a, 26a eine Bildeingangswechseleinheit 46a auf, die dazu vorgesehen ist, die der Objektträgereinheit 22a, 23a, 24a, 25a, 26a jeweils zugeordnete Bildeingangseinheit 14a, 15a, 16a, 17a, 18a zwischen mehreren Probenkanälen umzuschalten. Die Bildeingangswechseleinheit 46a ist jeweils von der Drehträgereinheit 52a gebildet, die die jeweilige Bildeingangseinheit 14a, 15a, 16a, 17a, 18a durch eine von einer Schwenkbewegung gebildete Drehbewegung zwischen mehreren Probenkanälen umschaltet, indem die Drehträgereinheit 52a relativ zu der Objektträgereinheit 22a, 23a, 24a, 25a, 26a derart bewegt wird, dass die der Objektträgereinheit 22a, 23a, 24a, 25a, 26a jeweils zugeordnete Bildeingangseinheit 14a, 15a, 16a, 17a, 18a einer anderen der Proben 28a, 30a, 32a, 34a zugewandt ist.

Die als Zentrifugen ausgebildeten Objektträgereinheiten 22a, 23a, 24a, 25a, 26a werden in einem Betrieb in Rotation versetzt, um unterschiedliche Schwerkraftverhältnisse für die Proben 28a, 30a, 32a, 34a zu simulieren. In dem zumindest einen Betriebszustand, in dem die Bildeingangseinheiten 14a, 15a, 16a, 17a, 18a zumindest im Wesentlichen rotatorisch an zumindest eine zugeordnete Objektträgereinheit 22a, 23a, 24a, 25a, 26a gekoppelt ist und die zugeordnete Objektträgereinheit 22a, 23a, 24a, 25a, 26a rotiert, rotiert die zugeordnete Bildeingangseinheit 14a, 15a, 16a, 17a, 18a gegenüber der Bildausgangseinheit 12a. Um eine Rotation des Bilds der Bildausgangseinheit 12a aufgrund der Rotation der Bildeingangseinheit 14a, 15a, 16a, 17a, 18a gegenüber der Bildausgangseinheit 12a zu vermeiden und ein feststehendes Bild zu erhalten, ist in einem Strahlengang zwischen der Bildeingangseinheit 14a, 15a, 16a, 17a, 18a und der Bildausgangseinheit 12a eine Derotatoreinheit 36a angeordnet (Fig. 4). Auf grundsätzlich bekannte Weise wird mittels einer Drehzahlhalbierungseinheit 38a die Derotatoreinheit 36a zumindest im Wesentlichen mit einer halben Drehzahl der Bildeingangseinheit 14a, 15a, 16a, 17a, 18a rotiert, um ein feststehendes Bild zu erhalten. Die Derotatoreinheit 36a weist hierzu auf grundsätzlich bekannte Weise ein vorzugsweise als Dove-Prisma ausgebildetes Prisma auf. In dem Dove-Prisma findet auf bekannte Weise nach Eintritt eines Lichtstrahls in das Prisma eine Totalreflexion des Lichtstrahls innerhalb des Prismas statt. Ein über den Lichtstrahl übertragenes Bild kann ferner durch Rotation des Dove-Prismas um eine Längsachse um ein doppeltes der Winkeländerung gedreht werden. Nach Durchgang eines Bilds durch das Dove-Prisma ist das Bild seitenverkehrt dargestellt. Aufgrund eines Strahlenverlaufs innerhalb des Prismas der Derotatoreinheit 36a und einer Rotation der Derotatoreinheit 36a mit einer halben Drehzahl der Bildeingangseinheit 14a, 15a, 16a, 17a, 18a um eine Längsachse der Derotatoreinheit 36a wird das sich aufgrund des Umlenkelements 48a mit einer doppelten Winkelgeschwindigkeit der Objektträgereinheit 22a, 23a, 24a, 25a, 26a rotierende Bild in ein feststehendes umgewandelt. Eine Seitenverkehrung des Bilds kann in der Bildausgangseinheit 12a mit einer Darstellung auf einer Kamera und/oder einem Monitor elektronisch korrigiert oder durch ein weiteres Dove-Prisma optisch korrigiert werden. In alternativen Ausgestaltungen der Erfindung kann anstelle eines Dove-Prismas in der Derotatoreinheit 36a auch ein Abbe-König-Prisma, ein Schmidt-Pechan-Prisma oder ein Uppendahl-Prisma verwendet werden. Die Drehzahlhalbierungseinheit 38a ist von einem Untersetzungsgetriebe gebildet, das mechanisch an die Objektträgereinheit 22a, 23a, 24a, 25a, 26a gekoppelt ist und auf diese Weise eine Rotation mit einer halben Drehzahl der Bildeingangseinheit 14a, 15a, 16a, 17a, 18a, die wiederum rotatorisch an die Objektträgereinheit 22a, 23a, 24a, 25a, 26a gekoppelt ist, bewirkt. Alternativ kann die Drehzahlhalbierungseinheit 38a auch von einer Steuereinheit gebildet sein, die von einer Steuereinheit der Objektträgereinheit 22a, 23a, 24a, 25a, 26a mit einer halben Drehzahl der Objektträgereinheit 22a, 23a, 24a, 25a, 26a angesteuert wird. Die Objektträgereinheit 22a wird von einem Zentrifugenmotor 58a angetrieben.

Die erfindungsgemäße Vorrichtung 10a zum Mikroskopieren ist zur Verwendung unter Bedingungen reduzierter Schwerkraft mit einer Schwerewirkung von maximal 0,9 g, beispielsweise an Bord einer Raumkapsel, Raumstation oder Rakete im Weltraum oder auf einem Asteroiden, Mond oder anderen Planeten als der Erde, vorgesehen. Insbesondere kann unter Bedingungen reduzierter Schwerkraft, vorzugsweise unter Schwerelosigkeit, mittels der als Zentrifugen ausgebildeten Objektträgereinheiten 22a, 23a, 24a, 25a, 26a ein Schwerkraftbereich zwischen der reduzierten Schwerkraft und einer Hypergravitation von g eingestellt werden und somit ein großer experimenteller Bereich abgedeckt werden. Ein Einsatz der erfindungsgemäße Vorrichtung 10a zum Mikroskopieren ist auch auf der Erde möglich, wobei mittels der als Zentrifugen ausgebildeten Objektträgereinheiten 22a, 23a, 24a, 25a, 26a eine Schwerkraft größer als 1 g simuliert werden kann.

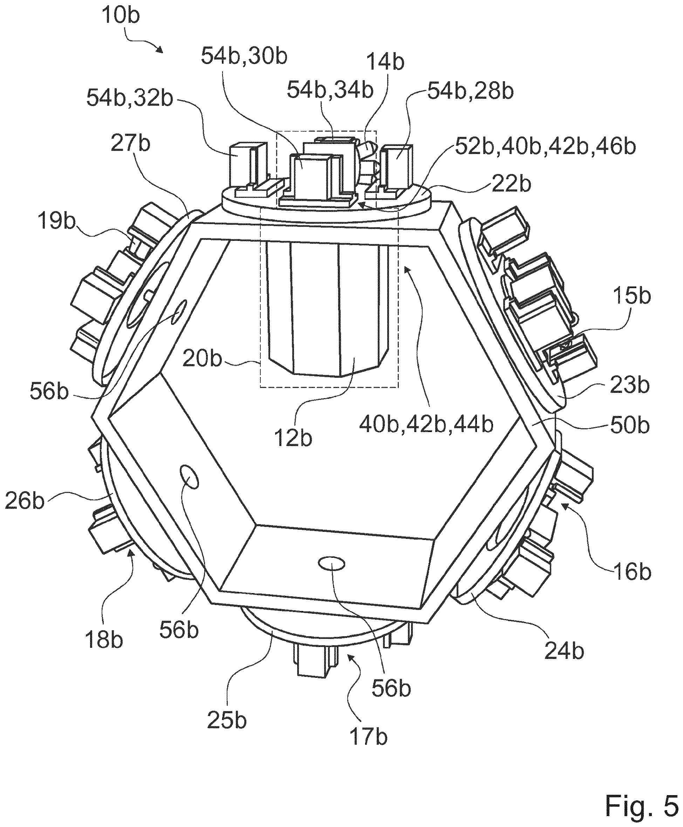

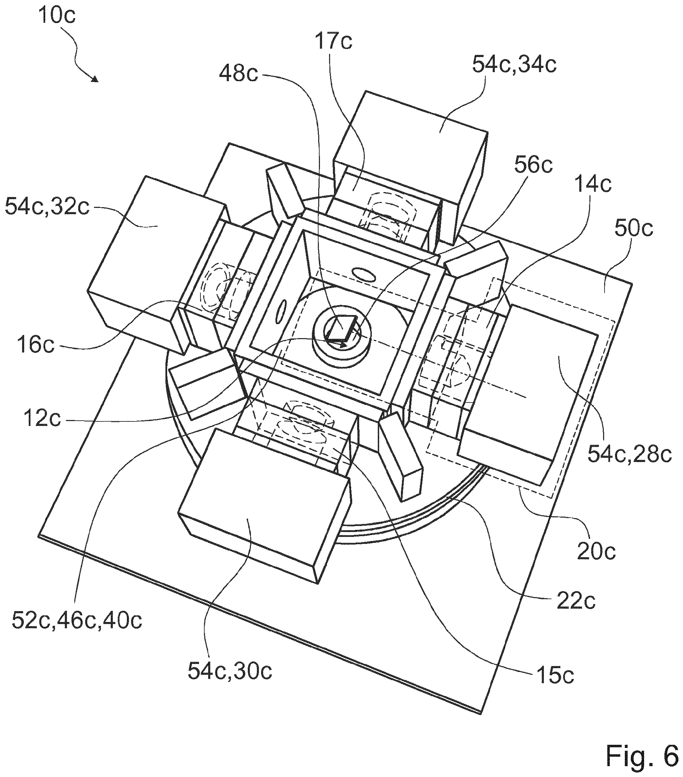

In den Figuren 5 und 6 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4 verwiesen wird. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 und 6 ist der Buchstabe a durch die Buchstaben b bis c ersetzt.

Fig. 5 zeigt eine alternative Vorrichtung 10b zum Mikroskopieren, in dem eine Mehrfachträgerstruktur 50b als eine Polygonstruktur ausgebildet ist. Die Polygonstruktur ist als Hexagon mit sechs Ecken und sechs Seitenflächen ausgebildet, wobei auf einer Oberseite der Polygonstruktur, die einem Zentrum abgewandt ist, auf den Seitenflächen jeweils eine Objektträgereinheit 22b, 23b, 24b, 25b, 26b, 27b, die als Zentrifuge ausgebildet ist, angeordnet ist. Auf jeder der Objektträgereinheiten 22b, 23b, 24b, 25b, 26b, 27b ist ferner eine Bildeingangseinheit 14b, 15b, 16b, 17b, 18b, 19b angeordnet. An einer Unterseite ist verfahrbar eine Bildausgangseinheit 12b im Zentrum angeordnet. Eine Einheit zum Verfahren der Bildausgangseinheit 12b an der Unterseite der Mehrfachträgerstruktur 50b bildet auf bekannte Weise eine Bildausgangswechseleinheit 44b einer Kanalwechseleinheit 42b sowie in Zusammenwirkung mit einem Umlenkelement 48b eine Kopplungseinheit 40b. Alternativ kann die als Polygonstruktur ausgebildete Mehrfachträgerstruktur 50b um die Bildausgangseinheit 12b zu einem Wechsel der Probenkanäle geschwenkt werden, wobei in diesem Fall eine Einheit zur Schwenkung der Polygonstruktur eine Bildausgangswechseleinheit 44b bildet.

In Fig. 6 ist eine weitere alternative Vorrichtung 10c zum Mikroskopieren ausschnittsweise dargestellt, bei der jeder Probe 28c, 30c, 32c, 34c auf einer Objektträgereinheit 22c jeweils eine separate Bildeingangseinheit 14c, 15c, 16c, 17c zugeordnet ist. Die alternative Vorrichtung 10c ist ansonsten vollkommen analog zu den vorhergehenden Ausführungsbeispielen ausgebildet.

### Bezugszeichen

- 10: Vorrichtung zum Mikroskopieren
- 12: Bildausgangseinheit
- 14: Bildeingangseinheit
- 15: Bildeingangseinheit
- 16: Bildeingangseinheit
- 17: Bildeingangseinheit
- 18: Bildeingangseinheit
- 19: Bildeingangseinheit
- 20: Mikroskopeinheit
- 22: Objektträgereinheit
- 23: Objektträgereinheit
- 24: Objektträgereinheit
- 25: Objektträgereinheit
- 26: Objektträgereinheit
- 27: Objektträgereinheit
- 28: Probe
- 30: Probe
- 32: Probe
- 34: Probe
- 36: Derotatoreinheit
- 38: Drehzahlhalbierungseinheit
- 40: Kopplungseinheit
- 42: Kanalwechseleinheit
- 44: Bildausgangswechseleinheit
- 46: Bildeingangswechseleinheit
- 48: Umlenkelement
- 50: Mehrfachträgerstruktur
- 52: Drehträgereinheit
- 54: Probenbehälter
- 56: Sichtloch
- 58: Zentrifugenmotor

## Patentansprüche

1. Vorrichtung zum Mikroskopieren mit einer Bildausgangseinheit (12a - c), zumindest zwei räumlich verteilt angeordneten Bildeingangseinheiten (14a - c, 15a - b, 16a - b, 17a - b, 18a - b, 19b), die unterschiedliche Probenaufnahmebereiche aufweisen, zumindest einer Objektträgereinheit (22a - c, 23a - b, 24a - b, 25a - b, 26a - b, 27b), die wenigstens eine Probe (28a - c, 30a - c, 32a - c, 34a - c), insbesondere wenigstens eine biologische Probe (28a - c, 30a - c, 32a - c, 34a - c), lagert und mit einer Kopplungseinheit (40a - c), die die Bildausgangseinheit (12a - c) und eine der zumindest zwei Bildeingangseinheiten (14a - c, 15a - b, 16a - b, 17a - b, 18a - b, 19b) optisch zu einer Mikroskopeinheit (20a - c) koppelt, **dadurch gekennzeichnet, dass** die zumindest eine Objektträgereinheit (22a - c, 23a - b, 24a - b, 25a - b, 26a - b, 27b) als Zentrifuge ausgebildet ist, wobei in zumindest einem Betriebszustand zumindest eine der Bildeingangseinheiten (14a - c, 15a - b, 16a - b, 17a - b, 18a - b, 19b) rotatorisch an zumindest eine zugeordnete Objektträgereinheit (22a - c, 23a - b, 24a - b, 25a - b, 26a - b, 27b) gekoppelt ist und wobei in dem zumindest einen Betriebszustand die zumindest eine Bildeingangseinheit (14a - c, 15a - b, 16a - b, 17a - b, 18a - b, 19b) gegenüber der Bildausgangseinheit (12a - c) rotiert.

2. Vorrichtung nach Anspruch 1, **dadurch gekennzeichnet, dass** die Mikroskopeinheit (20a - c) in einem montierten und ausgerichteten Zustand mehrteilig ausgebildet ist.

3. Vorrichtung nach Anspruch 1 oder 2, **gekennzeichnet durch** zumindest eine in einem Strahlengang zwischen der zumindest einen Bildeingangseinheit (14a, 15a, 16a, 17a, 18a) und der Bildausgangseinheit (12a) angeordnete Derotatoreinheit (36a).

4. Vorrichtung nach Anspruch 3, **gekennzeichnet durch** zumindest eine Drehzahlhalbierungseinheit (38a), mittels der die Derotatoreinheit (36a) zumindest im Wesentlichen mit einer halben Drehzahl der zumindest einen Bildeingangseinheit (14a, 15a, 16a, 17a, 18a) rotiert.

5. Vorrichtung nach einem der vorhergehenden Ansprüche, **dadurch gekennzeichnet, dass** die Bildausgangseinheit (12a - c) mit der zumindest einen Bildeingangseinheit (14a - c, 15a - b, 16a - b, 17a - b, 18a - b, 19b) optisch über zumindest ein Umlenkelement (48a - c) verbunden ist.

6. Vorrichtung nach einem der vorhergehenden Ansprüche, **gekennzeichnet durch** zumindest eine Kanalwechseleinheit (42a - c), die dazu vorgesehen ist, die Bildausgangseinheit (12a - c) zwischen verschiedenen Probenkanälen, die jeweils einer Probe (28a - c, 30a - c, 32a - c, 34a - c) zugeordnet sind, umzuschalten.

7. Vorrichtung nach Anspruch 6, **dadurch gekennzeichnet, dass** die Kanalwechseleinheit (42a - b) zumindest eine Bildausgangswechseleinheit (44a - b) aufweist, die dazu vorgesehen ist, die wenigstens eine Bildausgangseinheit (12a - b) zwischen zumindest zwei jeweils zumindest einem Probenkanal zugeordneten Arbeitspositionen zu verfahren oder zu positionieren.

8. Vorrichtung nach Anspruch 6 oder 7, **dadurch gekennzeichnet, dass** die Kanalwechseleinheit (42a - c) zumindest eine Bildeingangswechseleinheit (46a - c) aufweist, die dazu vorgesehen ist, zumindest eine der zumindest zwei Bildeingangseinheiten (14a - c, 15a - b, 16a - b, 17a - b, 18a - b, 19b) zwischen mehreren Probenkanälen umzuschalten.

9. Vorrichtung nach Anspruch 8, **dadurch gekennzeichnet, dass** die Bildeingangswechseleinheit (46a - c) die zumindest eine der zumindest zwei Bildeingangseinheiten (14a - c, 15a - b, 16a - b, 17a - b, 18a - b, 19b) durch eine Drehbewegung zwischen mehreren Probenkanälen umschaltet.

10. Vorrichtung zumindest nach Anspruch 6, **gekennzeichnet durch** eine Mehrfachträgerstruktur (50a - c), an der die Kanalwechseleinheit (42a - c), zumindest eine Bildausgangseinheit (12a - c), sowie mehrere Objektträgereinheiten (22a - c, 23a - b, 24a - b, 25a - b, 26a - b, 27b) und zugeordnete Bildeingangseinheiten (14a - c, 15a - b, 16a - b, 17a - b, 18a - b, 19b) angeordnet sind.

11. Vorrichtung nach Anspruch 10, **dadurch gekennzeichnet, dass** zumindest eine Objektträgereinheiten (22a - c, 23a - b, 24a - b, 25a - b, 26a - b, 27b) als Mehrfachprobenträgereinheit ausgebildet ist, an der mehrere Proben (28a - c, 30a - c, 32a - c, 34a - c) angeordnet sind.

12. Vorrichtung nach Anspruch 10 oder 11, **dadurch gekennzeichnet, dass** jeder Objektträgereinheit (22a - c, 23a - b, 24a - b, 25a - b, 26a - b, 27b) zumindest eine separate Bildeingangseinheit (14a - c, 15a - b, 16a - b, 17a - b, 18a - b, 19b) zugeordnet ist.

13. Vorrichtung zumindest nach Anspruch 10, **dadurch gekennzeichnet, dass** die Mehrfachträgerstruktur (50b) als eine Polygonstruktur ausgebildet ist

14. Vorrichtung nach einem der vorhergehenden Ansprüche, **dadurch gekennzeichnet, dass** jeder Probe jeweils eine separate Bildeingangseinheit (14a - c, 15a - b, 16a - b, 17a - b, 18a - b, 19b) zugeordnet ist.

15. Vorrichtung nach einem der vorhergehenden Ansprüche, **dadurch gekennzeichnet, dass** die Mikroskopeinheit (20a - c) als Fluoreszenzmikroskopeinheit ausgebildet ist.

16. Verwendung einer Vorrichtung (10a - c) nach einem der vorhergehenden Ansprüche unter Bedingungen reduzierter Schwerkraft.

## Claims

1. Device for microscopic examination, with an image output unit (12a-c), with at least two spatially distributed image input units (14a-c, 15a-b, 16a-b, 17a-b, 18a-b, 19b) having different sample receiving regions, with at least one object carrier unit (22a-c, 23a-b, 24a-b, 25a-b, 26a-b, 27b) supporting at least one sample (28a-c, 30a-c, 32a-c, 34a-c), in particular at least one biological sample (28a-c, 30a-c, 32a-c, 34a-c), and with a coupling unit (40a-c), which couples the image output unit (12a-c) and one of the at least two image input units (14a-c, 15a-b, 16a-b, 17a-b, 18a-b, 19b) optically to form a microscope unit (20a-c), **characterised in that** the at least one object carrier unit (22a-c, 23a-b, 24a-b, 25a-b, 26a-b, 27b) is embodied as a centrifuge, wherein in at least one operating state at least one of the image input units (14a-c, 15a-b, 16a-b, 17a-b, 18a-b, 19b) is rotationally coupled to at least one allocated object carrier unit (22a-c, 23a-b, 24a-b, 25a-b, 26a-b, 27b) and wherein in the at least one operating state the at least one image input unit (14a-c, 15a-b, 16a-b, 17a-b, 18a-b, 19b) rotates with respect to the image output unit (12a-c).

2. Device according to claim 1, **characterised in that** the microscope unit (20a-c) is embodied in a multi-partite fashion in an assembled and aligned state.

3. Device according to claim 1 or 2, **characterised by** at least one derotator unit (36a) arranged in a beam path between the at least one image input unit (14a, 15a, 16a, 17a, 18a) and the image output unit (12a).

4. Device according to claim 3, **characterised by** at least one rotation-speed-halving unit (38a), via which the derotator unit (36a) rotates at least substantially at half a rotational speed of the at least one image input unit (14a, 15a, 16a, 17a, 18a).

5. Device according to one of the preceding claims, **characterised in that** the image output unit (12a-c) is optically connected to the at least one image input unit (14a-c, 15a-b, 16a-b, 17a-b, 18a-b, 19b) via at least one deflection element (48a-c).

6. Device according to one of the preceding claims, **characterised by** at least one channel-switching unit (42a-c), which is configured to switch the image output unit (12a-c) between different sample channels, each of which is allocated to one sample (28a-c, 30a-c, 32a-c, 34a-c).

7. Device according to claim 6, **characterised in that** the channel-switching unit (42a-b) comprises at least one image output switching unit (44a-b), which is configured to traverse or position the at least one image output unit (12a-b) between at least two work positions, each of which is allocated to at least one sample channel.

8. Device according to claim 6 or 7, **characterised in that** the channel-switching unit (42a-c) comprises at least one image input switching unit (46a-c), which is configured to switch at least one of the at least two image input units (14a-c, 15a-b, 16a-b, 17a-b, 18a-b, 19b) between a plurality of sample channels.

9. Device according to claim 8, **characterised in that** the image input switching unit (46a-c) switches the at least one of the at least two image input units (14a-c, 15a-b, 16a-b, 17a-b, 18a-b, 19b) between a plurality of sample channels by a rotational movement.

10. Device at least according to claim 6, **characterised by** a multiple carrier structure (50a-c), which the channel-switching unit (42a-c), at least one image output unit (12a-c) as well as a plurality of object carrier units (22a-c, 23a-b, 24a-b, 25a-b, 26a-b, 27b) and allocated image input units (14a-c, 15a-b, 16a-b, 17a-b, 18a-b, 19b) are arranged on.

11. Device according to claim 10, **characterised in that** at least one object carrier unit (22a-c, 23a-b, 24a-b, 25a-b, 26a-b, 27b) is embodied as a multiple sample carrier unit, which a plurality of samples (28a-c, 30a-c, 32a-c, 34a-c) are arranged on.

12. Device according to claim 10 or 11, **characterised in that** at least one separate image input unit (14a-c, 15a-b, 16a-b, 17a-b, 18a-b, 19b) is allocated to each object carrier unit (22a-c, 23a-b, 24a-b, 25a-b, 26a-b, 27b).

13. Device at least according to claim 10, **characterised in that** the multiple carrier structure (50b) is embodied as a polygonal structure.

14. Device according to one of the preceding claims, **characterised in that** a separate image input unit (14a-c, 15a-b, 16a-b, 17a-b, 18a-b, 19b) is allocated to each sample.

15. Device according to one of the preceding claims, **characterised in that** the microscope unit (20a-c) is embodied as a fluorescence microscope unit.

16. Usage of a device (10a-c) according to one of the preceding claims under conditions of reduced gravitational force.

## Revendications

1. Dispositif de microscopie avec une unité de sortie d'image (12a-c), avec au moins deux unités d'entrée d'image (14a-c, 15a-b, 16a-b, 17a-b, 18a-b, 19b), lesquelles sont disposées spatialement réparties et comportent des zones d'accommodation d'échantillons différentes, avec au moins une unité porte-objet (22a-c, 23a-b, 24a-b, 25a-b, 26a-b, 27b) supportant au moins un échantillon (28a-c, 30a-c, 32a-c, 34a-c), en particulier au moins un échantillon biologique (28a-c, 30a-c, 32a-c, 34a-c), et avec une unité à couplage (40a-c) couplant optiquement l'unité de sortie d'image (12a-c) et une des au moins deux unités d'entrée d'image (14a-c, 15a-b, 16a-b, 17a-b, 18a-b, 19b) pour former une unité de microscope (20a-c), **caractérisé en ce que** l'au moins une unité porte-objet (22a-c, 23a-b, 24a-b, 25a-b, 26a-b, 27b) est réalisée comme centrifugeuse, au moins une des unités d'entrée d'image (14a-c, 15a-b, 16a-b, 17a-b, 18a-b, 19b) étant, dans au moins un état de fonctionnement, raccordée de façon rotative à au moins une unité porte-objet (22a-c, 23a-b, 24a-b, 25a-b, 26a-b, 27b) attribuée, et l'au moins une unité d'entrée d'image (14a-c, 15a-b, 16a-b, 17a-b, 18a-b, 19b) tournant par rapport à l'unité de sortie d'image (12a-c) dans l'au moins un état de fonctionnement.

2. Dispositif selon la revendication 1, **caractérisé en ce que,** dans un état monté et aligné, l'unité de microscope (20a-c) est réalisée dans une implémentation pluripartite.

3. Dispositif selon la revendication 1 ou 2, **caractérisé par** au moins une unité dérotateur (36a) disposée dans un trajet optique entre l'au moins une unité d'entrée d'image (14a, 15a, 16a, 17a, 18a) et l'unité de sortie d'image (12a).

4. Dispositif selon la revendication 3, **caractérisé par** au moins une unité à diminution de la vitesse rotative de moitié (38a), par le biais de laquelle l'unité dérotateur (36a) tourne avec l'au moins sensiblement demie vitesse rotative de l'au moins une unité d'entrée d'image (14a, 15a, 16a, 17a, 18a).

5. Dispositif selon l'une quelconque des revendications précédentes, **caractérisé en ce que** l'unité de sortie d'image (12a-c) est raccordée optiquement avec l'au moins une unité d'entrée d'image (14a-c, 15a-b, 16a-b, 17a-b, 18a-b, 19b) via au moins un élément déflecteur (48a-c).

6. Dispositif selon l'une quelconque des revendications précédentes, **caractérisé par** au moins une unité à changement de canal (42a-c), laquelle est prévue pour commuter l'unité de sortie d'image (12a-c) entre canaux d'échantillon différents, lesquels sont attribués à un échantillon (28a-c, 30a-c, 32a-c, 34a-c) respectivement.

7. Dispositif selon la revendication 6, **caractérisé en ce que** l'unité à changement de canal (42a-b) comporte au moins une unité à changement de sortie d'image (44a-b), laquelle est prévue pour traverser ou positionner l'au moins une unité de sortie d'image (12a-b) entre au moins deux positions opératives chacune desquelles étant attribuée à au moins un canal d'échantillon.

8. Dispositif selon la revendication 6 ou 7, **caractérisé en ce que** l'unité à changement de canal (42a-c) comporte au moins une unité à changement d'entrée d'image (46a-c), laquelle est prévue pour commuter au moins une des au moins deux unités d'entrée d'image (14a-c, 15a-b, 16a-b, 17a-b, 18a-b, 19b) entre plusieurs canaux d'échantillon.

9. Dispositif selon la revendication 8, **caractérisé en ce que** l'unité à changement d'entrée d'image (46a-c) commute l'au moins une des au moins deux unités d'entrée d'image (14a-c, 15a-b, 16a-b, 17a-b, 18a-b, 19b) entre plusieurs canaux d'échantillon par un mouvement rotatif.

10. Dispositif au moins selon la revendication 6, **caractérisé par** une structure porteuse multiple (50a-c), à laquelle sont distribuées l'unité à changement de canal (42a-c), au moins une unité de sortie (12a-c) ainsi qu'une pluralité des unités porte-objet (22a-c, 23a-b, 24a-b, 25a-b, 26a-b, 27b) et des unités d'entrée d'image (14a-c, 15a-b, 16a-b, 17a-b, 18a-b, 19b) attribuées.

11. Dispositif selon la revendication 10, **caractérisé en ce qu'**au moins une unité porte-objet (22a-c, 23a-b, 24a-b, 25a-b, 26a-b, 27b) est réalisée comme unité porte-objet multiple, à laquelle plusieurs échantillons (28a-c, 30a-c, 32a-c, 34a-c) sont disposés.

12. Dispositif selon la revendication 10 ou 11, **caractérisé en ce qu'**au moins une unité d'entrée d'image (14a-c, 15a-b, 16a-b, 17a-b, 18a-b, 19b) séparée est attribuée à chacune unité porte-objet (22a-c, 23a-b, 24a-b, 25a-b, 26a-b, 27b).

13. Dispositif au moins selon la revendication 10, **caractérisé en ce que** la structure porteuse multiple (50b) est implémentée comme structure polygonale.

14. Dispositif selon l'une quelconque des revendications précédentes, **caractérisé en ce que** respectivement une unité d'entrée d'image (14a-c, 15a-b, 16a-b, 17a-b, 18a-b, 19b) séparée est attribuée à chacun échantillon.

15. Dispositif selon l'une quelconque des revendications précédentes, **caractérisé en ce que** l'unité de microscope (20a-c) est réalisé comme unité de microscope en fluorescence.

16. Usage d'un dispositif (10a-c) selon l'une quelconque des revendications précédentes sous conditions de gravité réduite.
